Europäisches Patentamt

European Patent Office

Office européen des brevets

(19)

(11) Veröffentlichungsnummer: **0 492 248 A2**

# (12) EUROPÄISCHE PATENTANMELDUNG

(21) Anmeldenummer: **91121065.6**

(22) Anmeldetag: **09.12.91**

(51) Int. Cl.5: **B32B 5/30**, E04B 1/94

(30) Priorität: **22.12.90 DE 4041470**

(43) Veröffentlichungstag der Anmeldung:
**01.07.92 Patentblatt 92/27**

(84) Benannte Vertragsstaaten:
**CH DE ES FR GB IT LI NL SE**

(71) Anmelder: **BAYER AG**

**W-5090 Leverkusen 1 Bayerwerk(DE)**

(72) Erfinder: **Von Bonin, Wulf, Dr.**
**Droste-Hülshoff-Strasse 9**
**W-5068 Odenthal(DE)**
Erfinder: **Von Gizycki, Ulrich, Dr.**
**Wiembachallee 24**
**W-5090 Leverkusen 3(DE)**

(54) **Intumsezenzfähige Flächengebilde, deren Herstellung und deren Verwendung.**

(57) Neue intumeszenzfähige Flächengebilde enthalten eine Schicht körniges Intumeszenzmaterial zwischen zwei textilen Flächengebilden, die miteinander vernadelt oder vernäht sind.

EP 0 492 248 A2

Intumeszenzfähige, d.h. thermisch expansionsfähige Flächengebilde, die gegebenenfalls flexibel sind, sind von Interesse für Zwecke des Brandschutzes und für die Herstellung von Konstruktionselementen.

Es ist bekannt, intumeszenzfähige Gebilde durch Beschichtung von Textilien mit Intumeszenzmaterialien herzustellen. Diese haben jedoch den Nachteil, daß wegen der oftmals geringen Flexibilität der Beschichtungen diese brechen und bröckeln und, daß bei der Herstellung solcher Gebilde nur Intumeszenzwirkstoffe mit einem Bindemittel und oft auch mit einem Lösungsmittel eingesetzt werden können, was häufig unerwünscht ist.

Es wurden nun intumeszenzfähige Fächengebilde gefunden, die dadurch gekennzeichnet sind, daß sie zwischen zwei textilen Flächengebilden, die miteinander vernadelt oder vernäht sind, eine Schicht eines körnigen Intumeszenzmittels enthalten.

Es wurde auch ein Verfahren gefunden, gegebenenfalls flexible intumeszierende Flächengebilde ohne Verwendung von Lösungs- oder Bindemitteln herzustellen, welches zudem auch zu Flächengebilden mit guten mechanischen Eigenschaften führt und für prinzipiell alle intumeszierenden Feststoffe geeignet ist.

Das erfindungsgemäße Verfahren zur Herstellung von intumeszenzfähigen Flächengebilden ist dadurch gekennzeichnet, daß man auf ein textiles Flächengebilde eine Schicht eines körnigen Intumeszenzmittels aufbringt, auf diese Beschichtung ein zweites textiles Flächengebilde aufbringt und dann beide Flächengebilde miteinander vernadelt oder vernäht. So entsteht eine Art Sandwichstruktur mit einer Mittellage, die intumeszenzfähig ist.

Von besonderem Interesse sind Ausführungsformen der vorliegenden Erfindung, bei denen mindestens eines der textilen Flächengebilde ein Vlies aus cellulosischem Material ist und als körniges Intumeszenzmittel Blähgraphit oder Blähgraphit enthaltende Formulierungen verwendet wurden.

In die erfindungsgemäßen intumeszenzfähigen Flächengebilde können mit Vorteil Glasfasern und/oder Mineralfasern integriert werden, z.B. als Bestandteil der textilen Flächengebilde oder als eine zusätzliche Schicht in Gewebe- oder Vliesform oder als lose Beimengung in der Schicht aus körnigem Intumeszenzmaterial.

Erfindungsgemäße Flächengebilde können überraschenderweise hochflexibel und mechanisch widerstandsfähig sein, auch wenn das Intumeszenzmaterial selbst starr und kristallin ist. Dieses liegt im fertigen Produkt hervorragend fixiert vor, auch wenn es in Pulverform oder als Granulat eingesetzt wurde. Eine besonders gute Fixierung erhält man, wenn man als textile Flächengebilde Vliese einsetzt und diese durch Vernadelung miteinander verbindet.

Es ist weiterhin überraschend, daß das Vernadelungsverfahren auch bei dicken Lagen des Intumeszenzmittels, insbesondere von Blähgraphit vorteilhafte Produkte ergibt, wobei die Nadeln keinen Schaden nehmen, auch wenn das Intumeszenzmittel in Form von relativ großen, z.B. 0,3 - 3 mm Durchmesser aufweisenden Partikeln eingesetzt wird.

Als textile Flächengebilde kommen vorzugsweise vernadelbare Gewebe, Gewirke, Gestricke, Gelege und insbesondere Vliese in Frage. Im Falle, daß erfindungsgemäße Produkte durch Vernähen erhalten werden sollen, können auch Folien und Schaumstofflagen anstelle der textilen Flächengebilde in Betracht gezogen werden. Es ist bevorzugt textile Flächengebilde zu verwenden und diese zu vernadeln. Man kann auch mehrfache Vernadelungen vornehmen, wobei gegebenenfalls einmalige oder mehrmalige Doublierungen der gebildeten Sandwichstruktur möglich sind.

Als Ausgangsmaterial einzusetzende textile Flächengebilde, vorzugsweise Vliese, können z.B. Flächengewichte von 20 bis 600 $g/m^2$ und mehr, vorzugsweise 50 bis 250 $g/m^2$ aufweisen. Vorzugsweise sind sie bereits vorvernadelt oder gegebenenfalls durch Bindemittel verfestigt. Ein vorvernadeltes Vlies läßt sich effektiver handhaben und ist daher bevorzugt. Die Faserlänge (Stapellänge) im Vlies kann beispielsweise mindestens 5 mm, vorzugsweise über 20 mm betragen.

Als Fasermaterial für textile Flächengebilde kommen vorzugsweise cellulosische Fasern, gegebenenfalls in Verbindung mit Mineralfasern oder auch Mineralfasern als solche, in Betracht. Sonstige Beispiele für Fasermaterial für textile Flächengebilde sind: Holz(schliff), Zellwoll-, Viskose- und Celluloseesterfasern, Baumwolle, Hanf, Jute, Sisal, Kokosfasern, Papierstoff, Altpapierstoff, Asbest, übliche Glasfasern, Glasfeinstfasern, Steinwolle, Kaolinfasern, Aluminiumoxidfasern, Kohlenstoffasern, Metallfasern sowie Fasern und Feinstfasern auf der Basis von aliphatischen, araliphatischen oder aromatischen, organischen polymeren Verbindungen, wie Polyolefine, Polydiolefine, Polyamide, Polyimide, Polyvinylalkohole, Polyacrylate, Poly(meth)acrylate, Polyacrylnitrile und deren Oxidationsund/oder Pyrolyseprodukte, Polyester, Polyether, Polyurethane, Polyharnstoffe, Polysiloxane, Polyphosphazene, Proteine und Polycarbodiimide.

Selbstverständlich können auch Gemische verschiedener Fasern in den textilen Flächengebilden vorliegen.

Auch Metallfasern, z.B. solche aus Stahl, Edelstahl, Kupfer und/oder Silber kommen, vorzugsweise als Fasergemisch-Komponente, in Frage.

Die einzusetzenden textilen Flächengebilde können gleichartig aber auch verschiedenartig sein.

Beim erfindungsgemäßen Herstellungsverfahren für intumeszenzfähige Flächengebilde kann man so vorgehen, daß man auf ein vorgelegtes textiles Flächengebilde, vorzugsweise ein vorvernadeltes Zellwoll- oder Baumwollvlies, das gegebenenfalls auch noch Mineralfasern enthält, vorzugsweise eine trockene, streu- oder rieselfähige Schicht eines Intumeszenzmittels aufbringt. Bei dem Intumeszenzmittel kann es sich auch um ein Gemisch verschiedener Intumeszenzmittel, eine Intumeszenzmittelzubereitung oder eine Intumeszenzformulierung handeln. Das Aufbringen aus einer flüssigen Phase, z.B. aus einer wäßrigen Dispersion, oder als pastöse Formulierung ist zwar möglich, wird jedoch nicht bevorzugt, da das lösungsmittelfreie Arbeiten mit streufähigem Intumeszenzmaterial verfahrenstechnisch vorteilhaft ist. Man kann gegebenenfalls vor, während oder nach dem Aufbringen des Intumeszenzmittels auch noch weitere faserige Gebilde, z.B. Lagen aus Mineralfasern, Mineralfaservliese, Glasgewebe oder Stränge aus Kohlenstoffasern auflegen oder einarbeiten.

Bevorzugte Intumeszenzmittel sind thermisch blähfähige Graphite oder diese enthaltende Formulierungen. Solche Graphite können z.B. Korndurchmesser von 0,1 bis 5, vorzugsweise von 0,4 bis 3 mm aufweisen. Sie sind sogenannte Einlagerungsverbindungen (Interkalationsverbindungen) des Graphits oder sogenannte Graphitsalze. Vorzugsweise werden solche Blähgraphite verwendet, die durch Behandeln von Graphiten mit Salpetersäure und/oder Schwefelsäure, gegebenenfalls in rauchender Form, gegebenenfalls zusammen mit $H_2O_2$, erhältlich sind und als Treibmittel Wasser $NO_x$ und/oder $SO_x$ beinhalten. Solche Graphite können in der Entstehungsform, aber auch neutralisiert, z.B. mit Alkalien, Ammoniak oder Aminen neutralisiert, eingesetzt werden.

Der Expansionsprozeß solcher Blähgraphite, der zu Volumenzunahmen von mehreren 100 % führen kann, beginnt etwa ab 180°C und ist im allgemeinen etwa bei 600°C abgeschlossen. Die vollständige Expansion des Blähgraphits oder anderer Intumeszenzmittel ist jedoch nicht mehr Teil der vorliegenden Erfindung.

Die Blähgraphite können gegebenenfalls auch in Verbindung mit anderen Intumeszenzmaterialien oder mit Glasflakes, -pulver oder -fasern, sonstigen Mineralien oder beschichtet mit einem Bindemittel zum Einsatz gelangen.

Andere Intumeszenzmittel als Blähgraphite sind beispielsweise bei Temperaturen bis zu 900°C, vorzugsweise bis zu 600°C, expandierende Glimmer wie Perlite, Vermikulite oder expansionsfähige Borsilikate, Aluminate, Wasserglas-Gele, wasserhaltige Alkalisilikate und Additionsprodukte von Ammoniak oder Aminen an saure Aluminiumphosphate, wobei z.B. letztere auch als Binde- oder Beschichtungsmittel für Blähgraphit Verwendung finden können. Weitere Intumeszenzmittel können beispielsweise sein: Ammonium- und Aminphosphate, Ammonium- und Aminpolyphosphate, wie Phosphate oder Polyphosphonate des Ethylendiamins und Ammoniaks, des Melamins, des Harnstoffs und seiner Kondensationsprodukte oder Kombinationen, die neben Kohlehydraten oder Pentaerythrit und/oder dessen Kondensationsprodukten und/oder Melamin, Harnstoff, Dicyandiamid und/oder deren Methylolverbindungen und gegebenenfalls zusätzlich noch Ammoniumphosphate enthalten und als Intumeszenzmischungen grundsätzlich bekannt sind. Es kommen auch blähfähige Korkpulver, expansionsfähige Getreidekörner, Stärkezubereitungen und Rindenpulver, gegebenenfalls in Verbindung mit Ammoniumphosphat, in Betracht oder Pulver aus blähfähigem Polyurethan, wie sie z.B. in DE-A 33 02 416 und 33 02 417 beschrieben sind.

Außer blähfähigen Graphiten sind blähfähige Wasser enthaltende und/oder wasserabspaltende Silikate von besonderem Interesse für die vorliegende Erfindung.

Prinzipiell können sämtliche streufähigen, körnigen Intumeszenzmaterialien Verwendung finden. Die Korngrößen (mittlere Durchmesser) können z.B. 0,05 bis 5 mm, vorzugsweise 0,3 bis 3 mm betragen.

Intumeszenzmittel können z.B. in einer Menge von 10 bis 5.000 g/m$^2$ und mehr, vorzugsweise 50 bis 1.000 g/m$^2$ auf das textile Flächengebilde aufgebracht werden. Die Aufbringung kann mit gleichmäßiger Schichtdicke, aber auch streifen- oder musterartig erfolgen. Bestimmte Teilflächen können unbestreut verbleiben oder mit erhöhter Materialmenge bestreut werden. Anschließend kann man so verfahren, daß man auf die körnige Schicht aus Intumeszenzmaterial eine zweite, vorzugsweise vernadelungsfähige Bahn aus textilem Material auflegt und den so gebildeten Sandwich vernäht oder vorzugsweise vernadelt. Für die Vernadelung sind die bei der Vliesverarbeitung üblichen Vernadelungsanlagen mit den verschiedensten üblichen Nadelformen, -mengen, -dichten und -anordnungen geeignet. Vorzugsweise wird durch beide textile Flächengebilde hindurch vernadelt. Es ist aber auch nur ein teilweises Eindringen der Nadeln in das untenliegende textile Flächengebilde möglich.

Durch die einfache oder wiederholte, vorzugsweise vollflächige, aber gegebenenfalls auch musterartig, partiell, vorgenommene Vernadelung wird der gebildete Sandwich verfestigt und das als Innenlage in dem Sandwich befindliche Intumeszenzmaterial in den Sandwich eingebunden, so daß es zumeist auch an frischen Schnittkanten nur unwesentlich herausrieselt.

Die Mitverwendung von gegebenenfalls thermoplastischen oder reaktiven Bindemitteln ist zwar möglich, jedoch nicht bevorzugt.

Anschließend kann der so hergestellte Sandwich ( = das erfindungsgemäße intumeszenzfähige Flächengebilde) entweder direkt oder nach geeignetem Zuschnitt der Verwendung zugeführt oder nachbehandelt werden. Die Nachbehandlung kann z.B. eine biocide, hydrophobe oder oleophobe Ausrüstung, sowie eine Einfärbung oder Bedruckung sein. Es ist von Vorteil, das frisch vernadelte Flächengebilde, gegebenenfalls unter Zufuhr von Dampf, noch zu bügeln oder zu plätten, wobei Temperaturen von bis zu 200°C, vorzugsweise 80 bis 150°C und Drucken z.B. bis 50 kg/cm² und höher, vorzugsweise 1 bis 5 kg/cm², zur Anwendung kommen können. Bei derartigem Bügeln oder Plätten ist darauf zu achten, daß das im Sandwich befindliche Intumeszenzmittel nicht oder nur teilweise expandiert.

Man kann in speziellen Fällen das erfindungsgemäße Flächengebilde durch eine kurzzeitige Erhitzung auf Temperatur, z.B. zwischen 150°C und 300°C nachbehandeln, z.B. in einer Presse, so daß bereits auf dieser Verfahrensstufe, d.h. vor der bestimmungsgemäßen Verwendung des intumeszenzfähigen Flächengebildes eine gewisse Expansion seiner Innenlage eintritt. Diese Expansion kann zur Versteifung des Materials und/oder zu einer noch besseren Einbindung der Intumeszenzmaterialien und zu einer Raumgewichtsverminderung führen. Im Falle des Blähgraphits tritt auch eine gewisse Verfilzung der eingelagerten, nunmehr teilexpandierten Blähgraphitteilchen ein, was die Verbindung der Blähgraphitteilchen untereinander und mit dem flächigen Gesamtgebilde weiter verbessert, ohne dessen Flexibilität wesentlich einzuschränken.

Erfindungsgemäße intumeszenzfähige Flächengebilde können auch mehrlagig hergestellt und/oder mehrlagig vernadelt oder vernäht werden. Sie können weiteren Beschichtungs- und Imprägnierprozessen zugeführt werden, beispielsweise um sie ein- oder beidseitig, flächig oder musterartig noch weiter zu verfestigen, wasserfest zu machen, mit Klebstoffschichten zu versehen oder mechanisch zu verfestigen oder zu schützen. Man kann sie auch für die Herstellung von sogenannten Prepregs verwenden, d.h. von Kunstharzimprägnaten, die Minuten, Tage oder Monate lagerfähig sind und bei Erhitzung z.B. auf 80 bis 600°C, vorzugsweise 100 bis 300°C, gegebenenfalls unter Formgebung ausgehärtet werden können.

Hierbei kann die Härtungsreaktion des Kunstharzes gegebenenfalls mit der Expansion des als Basis dienenden erfindungsgemäßen Flächgebildes kombiniert werden, wodurch faserverstärkte leichtgewichtige Formteile herstellbar werden.

Als Kunstharze kommen außer Thermoplasten wie Polyolefinen, Polyvinylaromaten, Polyvinylestern, Polyacrylaten, Polyamiden, Polyestern, Polyurethanen, Polycarbonaten, Polyäthern auch übliche Duroplastharze in Frage, z.B. ungesättigte Polyesterharze, Aminoplastharze, Phenolharze, Epoxydharze, Polyisocyanate, Polyisocyanate in Kombination mit Polyolen und/oder Epoxiden, Melaminharze, Cyanatharze und Polyimidharze.

Erfindungsgemäße intumeszenzfähige Flächengebilde, die Deckschichten aus thermoplastischem Material enthalten, kann man auch zur Herstellung von sandwichartigen Leichtformkörpern verwenden, wobei man das in den erfindungsgemäßen Flächengebilden enthaltene Intumeszenzmittel bei Temperaturen im Bereich von 200 bis 2000°C, vorzugsweise 300 bis 900°C, unter Formgebung expandieren läßt. Derartige sandwichartige Leichtformkörper, ihre Herstellung und Verwendung ist Gegenstand einer eigenen älteren Patentanmeldung.

Es ist auch möglich, erfindungsgemäße Flächengebilde, deren Deckschichten aus nicht-thermoplastischem Material bestehen, in Formen bis zu beispielsweise 900°C, vorzugsweise auch 200 bis 600°C zu erhitzen und dabei das Intumeszenzmittel expandieren zu lassen. Das erfindungsgemäße intumeszenzfähige Flächengebilde kann zuvor in gewünschter Weise zugeschnitten und gegebenenfalls auch mehrlagig in die Form eingebracht werden, gegebenenfalls auch in Form von Umwicklungen eines Formkernes. Bei Expansion wird dann die Form, zumeist eine Metallform aus Stahl oder Aluminium, aber auch eine keramische Form, durch den gebildeten Intumeszenzschaum ausgefüllt, so daß ein Leichtformkörper resultiert, dessen Oberflächen durch das Pyrolysat des eingesetzten intumeszenzfähigen Flächengebildes gebildet werden. Hierbei können wie bei anderen Formgebungsverfahren auch technisch übliche Trennmittel verwendet werden, z.B. solche auf Silikon-, Teflon®- oder Bornitridbasis, aber auch Stärkelösungen oder Dispersionen von Aluminiumoxid, Talkum, Cellulose oder Graphit.

Neben der Formkörperherstellung können erfindungsgemäße intumeszenzfähige Flächengebilde insbesondere auf dem Gebiet des Brandschutzes, speziell des vorbeugenden Brandschutzes eingesetzt werden. Hierbei kann das erfindungsgemäße Material in Form von flächigen Abdeckungen, Tapeten, in Form von Wickeln oder geschneiderten Säcken, Dichtungen, Hülsen, Klebebändern und Füllungen als bei Beflammung intumeszierendes, zumeist raucharmes Schutzmittel eingesetzt werden. Dann wird im Brandfalle das Durchdringen der Flammen, der Hitze, des Rauches und der Brandgase z.B. durch Kabeldurchbrüche, Türblätter, Wandelemente, Fensterfugen, Ritzen, Fugen und Installationskanäle verhindert. Für diese Zwecke sind besonders die bevorzugt unter Verwendung von Blähgraphit oder blähgraphithaltigen Formulierungen hergestellten, insbesondere auch Glasfasern oder Mineralfasern enthaltenden und mit Deckschichten aus vorwiegend cellulosischen Fasern ausgerüsteten intumeszenzfähigen Flächengebilde geeignet. Diese, insbesondere wenn sie auch noch Phosphate mitenthalten, brennen kaum, entwickeln wenig Rauch und expandieren bei Beflammung wirkungsvoll.

Mit erfindungsgemäßen Flächengebilden können z.B. Dachflächen, Fußböden, abgehängte Zwischendecken, Türblätter, Behälterwände und Wandflächen belegt oder verklebt, Mauerdurchbrüche und Kabelschotts zugestopft, Hohlräume ausgefüllt und Kabel und Rohrleitungen umwickelt und Fenster eingefugt und damit brandgeschützt werden. Auch durch gitterförmige Anordnungen oder achsial durchströmbare lockere Wickel, die sich bei Beflammung durch Expansion schließen, sind Rauchgassperren für z.B. Klimakanäle oder Lüftungsöffnungen herstellbar. Auch Dichtungen oder Fugenfüllungen aus erfindungsgemäßen Flächengebilden, die sich im Brandfall durch Expansion schließen, kommen in Betracht. Die erfindungsgemäßen Flächengebilde können auch als Löschdecken und zur Abdeckung von Metall- oder Ölbränden Verwendung finden.

Wenn mit Wickeln aus den erfindungsgemäßen Flächengebilden Kunststoffrohre oder dünnwandige Metallrohre umgeben werden, die gegebenenfalls noch durch eine außen liegende Hülle, z.B. aus Blech geschützt sind, so werden solche Rohre bei Beflammung an der Wickelstelle durch die nach innen wirkende Expansion zugedrückt und so ein Durchtritt des Feuers verhindert. Durch die bei Erhitzung oder Beflammung stattfindende Expansion der Flächengebilde können sie, insbesondere bei mehrlagigem Einbau, auch dazu dienen, Sicherheitsschalter zu entriegeln, Schotts zu öffnen oder zu schließen und Hebel zu bedienen.

Im folgenden wird die Erfindung beispielhaft und prototypisch erläutert. Die angegebenen Teile und Prozente beziehen sich auf das Gewicht, soweit nicht anderes angegeben ist.

Beispiele:

Allgemeines

Zur Herstellung der intumeszenzfähigen Flächengebilde wurde eine technisch übliche Vernadelungsmaschine (Fa. Dilo KG, Typ NDLP/6D) verwendet, vor deren Einlauf ein Streutisch montiert war, über den eine Textilbahn (Vliesbahn) der Maschine zugeführt wurde. Etwa 80 cm vor dem Einlauf wurde über eine Rolle eine zweite Textilbahn (Vliesbahn) auf den Tisch geführt, die bündig auf die erste Bahn aufgelegt und so als Doppelschicht in die Vernadelungsanlage eingeführt wurde.

Über der ersten, über den Tisch laufenden Textilbahn war eine Streuvorrichtung montiert, mit deren Hilfe die über den Vorlagetisch laufende Bahn flächig bestreut wurde.

Als unten liegende Textilbahn (1) (textiles Flächengebilde) wurde ein vorvernadeltes Zellwollvlies mit einem Flächengewicht von 100 g/m$^2$ mit einem Titer von 1,7 Detex und und 40 mm Stapellänge verwendet. Als von oben zugeführte Textilbahn (2) wurde entweder das gleiche oder ein zusätzlich bezeichnetes anderes Material verwendet. Die Durchlaufgeschwindigkeit betrug 1,2 m/min. Das Bügeln erfolgte auf einer kontinuierlich arbeitenden Plättwalze bei 130° C, 3 bar Anpressdruck und einer Verweilzeit von 25 sec.

Beispiel 1

Textilbahn 1 und 2 waren gleich. Aufgestreut wurden 600 g/m$^2$ eines handelsüblichen China-Blähgraphits ($NO_x$-$SO_x$-Type, Expansionsfähigkeit ca. 1.200 Vol-% bei 600° C, mittlerer Korndurchmesser 1,8 mm). Nach dem ersten Durchlauf durch die Vernadelung wurde das entstandene Flächengebilde gewendet und von der anderen Seite her nochmals vernadelt. Der entstandene Sandwich wurde dann gebügelt und war dann verwendungsfähig. Es handelte sich um ein 2,7 mm dickes hoch flexibles und mechanisch stabiles Flächengebilde, aus dem beim Schneiden nahezu kein Blähgraphit herausrieselte.

Beispiel 2

Es wurde analog Beispiel 1 gearbeitet, jedoch wurde handelsüblicher $SO_x$-Blähgraphit der gleichen mittleren Korngröße wie in Beispiel 1 verwendet. Ausserdem wurde die Streumenge auf 1,1 kg/m$^2$ erhöht.

Beispiel 3

100 Teile einer 50 %igen Lösung von Aluminium-tris-phosphat in Wasser wurden unter Rühren mit 40 Teilen einer 50 %igen Aminoethanollösung in Wasser versetzt. 60 Teile der so hergestellten heißen Lösung des Aluminiumphosphatsalzes wurden mit 70 Teilen $NO_2$-Blähgraphit verrührt. Der entstandene Brei wurde getrocknet und der so gebildete Kuchen zerkleinert und auf 1,8 mm Korndurchmesser gesiebt. So wurde ein mit 30 % eines Aluminiumphosphatbindemittels beschichteten Blähgraphits erhalten. Das so vorbereitete körnige Material wurde in einer Menge von 700 g/m$^2$ auf die Textilbahn (1) aufgestreut, mit einer gleichartigen Textilbahn (2) doppelt vernadelt und geplättet.

Beispiel 4

Das gemäß Beispiel 3 erhaltene Flächengebilde wurde auf der Vernadelunganlage doubliert. Es hatte nach dem Bügeln eine Dicke von 5 mm, war hoch flexibel und mechanisch stabil. Beim Schneiden rieselte nahezu kein Intumeszenzmaterial heraus.

Beispiel 5

Es wurde gearbeitet wie in Beispiel 3, jedoch wurde vor dem Streuprozeß auf die Textilbahn (1) noch ein Glasvlies mit einem Flächengewicht von 300 g/m$^2$ aufgelegt, sodaß das aufgestreute Intumeszenzmaterial auf dem Glasvlies auflag, welches nach der Vernadelung analog Beispiel 3 zum Bestandteil der Sandwich-Mittellage wurde. Nach dem Bügeln wurde ein 2,8 mm dickes flexibles Flächengebilde erhalten.

Beispiel 6

Es wurde analog Beispiel 5 gearbeitet, jedoch wurde das Glasvlies erst nach dem Aufstreuen der Blähgraphit Zubereitung aufgelegt, sodaß das nachfolgende Zellwollvlies (Textilbahn (2)) diesem auflag. Bei der Vernadelung, die dreimal erfolgte, wurde ein stabiles Flächengebilde erhalten, das nach dem Bügeln eine Dicke von 3 mm aufwies und hervorragend als Löschdecke geeignet war.

Beispiel 7

Vor der Vernadelung und vor der Abdeckung mit der Textilbahn (2) wurden auf die Textilbahn (1) zunächst in einer Menge von 300 g/m$^2$ auf ca. 5 mm Länge verkleinerte handelsübliche Koalinfasern gestreut. Auf diese Schicht wurde in einer Menge von 700 g/m$^2$ die auch in Beispiel 3 verwendete Blähgraphitzusammensetzung gestreut, sodann nochmals eine Schicht von 300 g/m$^2$ der Kaolinfasern und schließlich mit der Textilbahn (2) abgedeckt und dreifach vernadelt. Es wurde ein flexibles, mechanisch stabiles Flächengebilde einer Dicke von 3,6 mm erhalten.

Beispiel 8

Es wurde analog Beispiel 3 gearbeitet, jedoch wurde die Blähgraphitzubereitung (700 Teile) vor dem Aufstreuen mit Kurzglasfasern (MG-Glasfaser, Bayer AG, 700 Teile) homogen vermischt und das Gemisch in einer Menge von 1.400 g/m$^2$ aufgestreut. Das nach doppeltem Vernadeln und anschließendem Bügeln erhaltene Flächengebilde (Sandwich) war mechanisch stabil, flexibel und hatte eine Dicke von 3,1 mm.

Beispiel 9

Es wurde analog Beispiel 1 gearbeitet. Es wurde jedoch ein Gemisch aus gleichen Teilen neutralem Ethylendiaminorthophosphat und Blähgraphit in einer Menge von 1.000 g/m$^2$ aufgestreut. Das so erhaltene stabile Flächengebilde war hochflexibel und hatte eine Dicke von 2,9 mm.

Beispiel 10

Es wurde wie in Beispiel 5 gearbeitet, jedoch wurde anstelle des Glasvlieses ein Glasgewebe in Leinenbindung mit einem Flächengewicht von 650 g/m$^2$ eingelegt. Nach dem Bügeln erhielt man ein flexibles, aber weniger leicht flächig verformbares Flächengebilde, das als Brandschutz-Abdeckung und Brandschutz-Unterlage für Kabelbahnen eingesetzt wurde.

Beispiel 11

Es wurde gearbeitet wie in Beispiel 3, jedoch wurde als Textilbahn (1) anstelle eines Zellwollvlieses ein Baumwollgewebe (Nessel) mit einem Flächengewicht von 200 g/m$^2$ verwendet. Nach beidseitigen doppelten Vernadeln und Bügeln wurde ein mechanisch widerstandfähiges, flexibles Flächengebilde erhalten, das eine gute Verbundfestigkeit hatte, sodaß beim Schneiden nahezu kein Blähgraphitmaterial herausrieselte.

Beispiel 12

Es wurde gearbeitet wie bei Beispiel 6, jedoch wurde als Textilbahnen 1 und 2 je ein Polyamidfaservlies mit einem Flächengewicht von 150 g/m$^2$ verwendet.

Beispiel 13

Es wurde gearbeitet wie in Beispiel 3, jedoch wurde als Textilbahn (2) ein Polypropylenfaservlies mit einem Flächengewicht von 200 g/m$^2$ eingesetzt. Die Bügeltemperatur wurde auf 120°C herabgesetzt.

Beispiel 14

Es wurde gearbeitet wie bei Beispiel 2, jedoch wurde anstelle des Blähgraphits ein 12 % Wasser enthaltendes schuppenartiges Natriumsilikat (Portil®A, Fa. Henkel) verwendet und die Bügeltemperatur auf 95°C verringert.

Beispiel 15

Es wurde gearbeitet wie bei Beispiel 14. Als Textilbahnen 1 und 2 wurde jedoch das in Beispiel 13 beschriebene Polypropylenfaservlies verwendet. Außerdem wurde die Bügeltemperatur auf 95°C vermindert.

### Beispiel 16

Es wurde wie in Beispiel 2 gearbeitet. Als Intumeszenzmaterial wurde jedoch ein inniges Gemisch aus dem Blähgraphit gemäß Beispiel 3 (300 Teile), dem Silikat gemäß Beispiel 14 (200 Teile) und der Glasfaser gemäß Beispiel 8 (200 Teile) eingesetzt. Man erhielt ein flexibles Flachengebilde mit gutem Materialverbund sowie guter mechanischer Stabilität. Beim Schneiden rieselte nahezu kein Intumeszenzmaterial heraus.

### Beispiel 17

Eine 50 %ige Lösung von Aluminium-tris-phosphat in Wasser wurde in einer Menge von 100 Teilen intensiv mit 19 Teilen Ethylendiamin vermischt. Der dabei entstandene neutrale Salzbrei wurde getrocknet und auf Korngrößen zwischen 0,18 und 1 mm zerkleinert. Man erhielt ein rieselfähiges, bei Beflammung intumeszierendes Pulver. Dieses wurde analog Beispiel 2 anstelle des Blähgraphits verarbeitet. Man erhielt einen mechanisch stabilen Sandwich mit guter Flexibilität, der in Form von Wickeln, Hülsen oder Abdeckungen zum Schutz von Kabeln gegen Brandeinwirkung verwendet werden kann.

### Beispiel 18 (Prüfung der Intumeszenz)

Zur Prüfung der Intumeszenzfähigkeit wurden aus den gemäß den Beispielen 1 bis 17 erhaltenen Flächengebilden Quadrate mit jeweils 3 cm Kantenlänge ausgeschnitten, auf ein Reckmetallsieb aus Stahl gelegt und in einem auf 600°C vorgeheizten Schrank eingebracht. Nach 30 min wurden die Proben aus dem Schrank entnommen. In allen Fällen hatte sich das ursprüngliche Volumen des Flächengebildes um mehr als 100 % vergrößert.

### Beispiel 19

In einem Deckelkasten aus 5 mm dickem, fein gelochtem Stahlblech mit den Innenmaßen 10 x 10 x 2 cm wurden 4 Lagen des gemäß Beispiel 1 erhaltenen Flächengebildes eingelegt (etwa 34 g). Dann wurde die Kastenform verschlossen und in einen Ofen gebracht, der im Verlaufe einer Stunde 600°C erreichte. Dann wurde die Form aus dem Ofen genommen, abgekühlt und der gebildete Formkörper entnommen. Er hatte noch ein Gewicht von 23 g, entsprechend einem Raumgewicht von 0,11 g/cm$^3$. Der so hergestellte Quader hatte eine Deckschicht aus pyrolysierter Zellwolle und eine Eindruckfestigkeit im Flächenmittel von 9,5 kg/cm$^2$, gemessen mit einem 0,25 cm$^2$ Meßstempel aus Stahl.

### Beispiel 20

In die Stahlform gemäß Beispiel 19 wurde eine Lage des gemäß Beispiel 2 erhaltenen Vlies-Sandwichs gelegt. Dann wurde die Form verschlossen und in einen auf 650°C vorgeheizten Ofen gebracht. Nach einer Stunde wurde die Form aus dem Ofen genommen, abgekühlt und geöffnet. Man hatte einen stabilen Quader mit einem mittleren Raumgewicht von 0,05 g/cm$^3$ erhalten, dessen Oberflächen aus Zellwollpyrolysat bestanden. Die Eindruckfestigkeit betrug im Flächenmittel 6,5 kg/cm$^2$.

Derartige Formkörper haben schaumstoffähnlichen duktilen Charakter. Sie sind als Schallschutzelemente geeignet, sie lassen sich spanabhebend bearbeiten, haben hohe elektrische Leitfähigkeiten und unter Sauerstoffausschluß hohe Temperaturbeständigkeiten von über 2.000°C.

### Beispiel 21

Es wurde analog Beispiel 19 gearbeitet, jedoch zwei Lagen des Flächengebildes aus Beispiel 3 verwendet. Man erhielt einen Leichtstoffquader mit einem mittleren Raumgewicht von 0,055 g/cm$^3$. Dieser wurde zusammen mit einem gemäß Beispiel 20 erhaltenen, noch nicht wärmebehandelten Quader in einen auf 700°C vorgeheizten Ofen, zu dessen Innenraum Luftzutritt gegeben war, eingebracht. Nach 6 h wurden die Quader entnommen. Der Gewichtsverlust des Quaders gemäß Beispiel 20 lag über 50 % und er hatte nahzu keine mechanische Festigkeit mehr, während der Gewichtsverlust des durch das Bindemittel gegen Oxidation geschützten Quaders gemäß Beispiel 21 nur 9 % betrug und dieser auch in Bezug auf Volumen und mechanische Eigenschaften keine Verlust aufwies.

### Beispiel 22

In einer Heizpresse mit einem Abstand der beiden beheizbaren Pressenplatten von 3 mm wurde ein 0,5 m$^2$ großes Stück des Flächengebildes aus Beispiel 1 drei Minuten lang auf 260°C erhitzt. Das so modifizierte, nunmehr 3 mm dicke Flächengebilde hatte einen textileren Griff als zuvor und wirkte "voller", ohne an Flexibilität verloren zu haben. Bei Beflammung erfolgte noch eine Expansion um über 100 Vol.-%.

### Beispiel 23

In einem Prüfofen wurde ein Wandelement eingebaut, in das flächensenkrecht PVC-Rohre eingebaut waren, deren Durchmesser 8 cm betrug. Flammenseitig wurden unmittelbar vor der Einbauwand die 30 cm in den Ofen hineinragenden Rohrstutzen mit einem 10-lagigen, 15 cm breiten Wickel aus den gemäß Beispieln 1, 2, 3, 4, 7, 8, 9, 12, 13, 14, 15 und 16 hergestellten Flächengebilden umgeben, deren jeweils letzte Lage durch eine Manschette aus 1 mm Stahlblech geschützt war.

Der in Anlehnung an DIN 4102 gebaute und betriebene Prüfofen wurde nach der Einheitstemperaturkurve befeuert. Nach 30 min Betriebszeit waren sämtliche PVC-Rohre durch die Expansion der flammenseitig angebrachten Wickel zusammengedrückt und für die Flammengase undurchlässig geworden.

## Beispiel 24

Mehrfach S-förmig gewendelte Stahlrohre (Wandstärke 3 mm, Außendurchmesser 4 cm) wurden je mit einer Röhre mit einem Innendurchmesser von 1,5 cm (Innenweite), die aus Flächengebilden gemäß vorhergehenden Beispielen zugeschnitten und geschneidert worden waren, übergezogen. In einlagiger Form kamen die Flächengebilde aus den Beispielen 2, 5, 6, 7, 8, 9, 12, 13, 14, 15 und 16 zum Einsatz. Das Flächengebilde aus Beispiel 1 kam zweilagig, das Flächengebilde aus Beispiel 3 sowohl einlagig als auch zweilagig zum Einsatz. Dann wurde mit einem Abstand von 1,5 cm eine Schutzmanschette aus 0,2 mm starken Stahlblech umgelegt und daß so erhaltene Gebilde 30 min auf 500°C erhitzt. Dann war eine schlüssige Verbindung zwischen Stahlrohr und äußerer Schutzmanschette durch das entstandene Expandat hergestellt, ohne daß im Verbundstück Lunker oder Hohlräume auftraten.

Die so hergestellten Umhüllungen haben schalldämpfende Eigenschaften und führten die Wärme des Innenrohres verlangsamt (ca. 5 - 15 W/K m) ab, was für Auspuffrohre erwünscht ist.

## Beispiel 25

1 m lange und 20 cm breite Streifen gemäß den Beispielen 2 und 3 erhaltener Flächengebilde wurden jeweils auf einer der beiden Oberflächen satt mit einem handelsüblichen heiß härtenden Epoxydharzgemisch getränkt. Dann wurden die Streifen in eine mit Aluminiumfolie ausgekleidete Form für eine 1 m lange und 1 cm dicke Rohrhalbschale eingelegt. Die Form wurde verschlossen und anschließend für 5 min auf 300°C erhitzt. Dann wurde abgekühlt und das entstandene, mit Aluminiumfolie kaschierte Formteil der Form entnommen. Nach Entfernen der Aluminiumfolie, lagen Leichtformschalen mit einem Raumgewicht unter 0,9 g/cm$^3$ vor, deren eine Oberfläche aus einer faserverstärkten Epoxydharzschicht bestand, die gute mechanische Festigkeiten vermittelte. Die nicht mit Epoxydharz getränkte Innenfläche hatte dagegen einen duktilen Charakter. Diese Halbschalen können als Brandschutz- und Isolier-Elemente für Rohrleitungen verwendet werden, sowie zur Herstellung von Kabelkanälen. Im Falle einer Beflammung erwies sich das Material in Richtung auf den Kreismittelpunkt seines Schnittes noch als expansionsfähig, d.h. intumeszenzfähig und konnte so innenliegende Kabel vor dem Flammenzutritt schützen und die Isolierwirkungen noch verbessern.

## Beispiel 26

Es wurde gearbeitet wie in Beispiel 25, jedoch wurde eine Härtungstemperatur von 680°C gewählt und alle Flächengebilde gemäß den Beispielen 1- 10 eingesetzt. Die Ofentemperatur (680°C) wurde im Laufe von 40 min erreicht und für 10 min beibehalten. Dann wurde abgekühlt und aus der Form entnommen. In allen Fällen wurde eine stabile Rohrhalbschale mit einem Raumgewicht unter 0,9 g/cm$^3$ erhalten, mit einer harten mechanisch stabilen Oberflächenschicht, dort wo vorher die Kunstharzimprägnierung vorlag. Bei Beflammung erfolgte keine weitere Expansion.

## Beispiel 27

In die Form gemäß Beispiel 20 wurde zunächst eine Platte aus handelsüblichem Polyphenylensulfid eingelegt (Dicke 3 mm), dann wurde ein Flächengebilde erhalten gemäß Beispiel 16 zugeschnitten und eingelegt, sodann wiederum eine gleichartige Polyphenylensulfid-Platte. Nun wurde die Form verschlossen und in einem Ofen auf 360°C aufgeheizt. Nach dem Erreichen der Temperatur wurde die Form aus dem Ofen genommen. Nach dem Abkühlen wurde ein Leichtsandwichquader mit Polyphenylensulfid-Deckschichten erhalten. Derartige Verbundmaterialien können im Gehäuse-, Lautsprecherboxen- und Karrosseriebau Verwendung finden.

## Beispiel 28

Es wurde wie bei Beispiel 27 gearbeitet, jedoch anstelle von Polyphenylensulfid wurden Platten aus Polypropylen verwendet, ein Flächengebilde erhalten gemäß Beispiel 14 eingesetzt und die Erhitzung nur bis 250°C durchgeführt. Man erhielt einen isolierenden harten Sandwich mit Polypropylendeckschichten mit einem Kernmaterial aus expandiertem Silikat.

### Beispiel 29

In das 15 cm dicke Wandelement eines Prüfofens gemäß Beispiel 23 wurden 2 cm breite und 55 cm tiefe durchgehende Fugen gefräst, sowie runde Löcher von 10 cm Durchmesser und 20 x 100 cm breite Schlitze. Mit flächigem Material aus den Beispielen 3, 5, 6, 7 und 8 wurden diese Mauerdurchbrüche wie folgt verschlossen: Die runden Löcher wurden durch 10 cm dicke und 10 cm breite Wickel aus den Sandwichbahnen gefüllt und verschlossen. Die Fugen wurden durch mehrfach gefaltete oder gerollte Abschnitte aus den Flächengebilden verschlossen und die Schlitze durch etwa nach Art von Zeitungspapier verknülltes Sandwichmaterial ohne spezielle Ordnung möglichst homogen zugestopft und durch ein außen vorgeseztes Stück Reckmetallgitter gegen Herausfallen gesichert. In einem Brandversuch, bei dem in Anlehnung an DIN 4102 mit der Einheitstemperaturkurve befeuert wurde, waren sämtliche Öffnungen auch noch nach 3 h Brenndauer verschlossen.

### Beispiel 30

Es wurde gearbeitet wie bei Beispiel 1, jedoch wurde anstelle von Blähgraphit ein handelsüblicher Vermikulit (thermisch expansionsfähiger Glimmer) mit mittlerem größten Korndurchmesser von 3 mm verwendet.

Der erhaltene Vließsandwich war mechanisch stabil, an den Schnittstellen rieselte nur unwesentlich Intumeszenzmaterial heraus, das Gebilde war voll flexibel, ließ sich rollen und falten; bei Belammung schäumte es kräftig auf.

Ein Streifen des Sandwichs U-förmig eingedrückt in eine 1 cm breite Fuge zwischen zwei Betonplatten verschloß die Fuge bei Beflammung.

### Beispiel 31

Es wurde gearbeitet wie in Beispiel 1, anstelle des Blähgraphits wurde jedoch ein Gemisch aus gleichen Teilen des Blähgraphits und des in Beispiel 30 verwendeten Vermikulits verwendet. Das erhaltene flexible Sandwichmaterial ließ sich für Brandschutzwecke analog Beispiel 30 und zur Herstellung von Formkörpern analog Beispiel 20 verwenden.

### Beispiel 32

100 Teile der 50 %-igen Lösung eines Umsetzungsproduktes aus einem Mol Aluminiumhydroxid mit drei Molen $H_3PO_4$ in Wasser wurden mit 38 Teilen Ethanolamin neutralisiert. Dann wurde das Wasser im Vakuum bei 80°C entfernt. 30 Teile des so erhaltenen intumeszenzfähigen hochviskosen Materials wurden bei 80°C mit 70 Teilen des in Beispiel 30 verwendeten Vermikulits verknetet. Dabei erhielt man ein nach Abkühlen auf 22°C streufähiges Materialgemisch, bei dem der Vermikulit mit dem Bindemittel gecoatet war. Dieses Material wurde analog Beispiel 1 mit 1000 g/m$^2$ Auflage zu einem Vließsandwich verarbeitet.

Dieser Sanwich konnte analog Beispiel 30 zu Brandschutzzwecken und analog Beispiel 20 zur Formteilherstellung verwendet werden.

## Patentansprüche

1. Intumeszenzfähige Flächengebilde, dadurch gekennzeichnet, daß sie zwischen zwei textilen Flächengebilden, die miteinander vernadelt oder vernäht sind, eine Schicht eines körnigen Intumeszenzmittels enthalten.

2. Verfahren zur Herstellung von intumeszenzfähigen Flächengebilden, dadurch gekennzeichnet, daß man auf ein textiles Flächengebilde eine Schicht eines körnigen Intumeszenzmittels aufbringt, auf diese Beschichtung ein zweites textiles Flächengebilde aufbringt und dann beide Flächengebilde miteinander vernadelt oder vernäht.

3. Verfahren nach Anspruch 2, dadurch gekennzeichnet, daß mindestens eines der textilen Flächengebilde ein Vlies aus cellulosischem Material ist und als körniges Intumeszenzmittel Blähgraphit oder Blähgraphit enthaltende Formulierungen verwendet werden.

4. Verfahren nach Ansprüchen 2 und 3, dadurch gekennzeichnet, daß Glasfasern und/oder Mineralfasern integriert werden als Bestandteil der textilen Flächengebilde oder als eine zusätzliche Schicht in Gewebe- oder Vliesform oder als lose Beimengung in der Schicht aus körnigem Intumeszenzmaterial.

5. Verfahren nach Ansprüchen 2 bis 4, dadurch gekennzeichnet, daß man als textile Flächengebilde Vliese mit einem Flächengewicht von 20 bis 600 g/m$^2$ einsetzt und diese durch Vernadelung miteinander verbindet.

6. Verfahren nach Ansprüchen 2 bis 5, dadurch gekennzeichnet, daß man als Fasermaterial für die textilen Flächengebilde cellulosische Fasern, gegebenenfalls in Verbindung mit Mineralfasern oder Mineralfasern als solche, Holz-(schliff), Zellwollfasern, Viskosefasern, Celluloseesterfasern, Baumwolle, Hanf, Jute, Sisal, Kokosfasern, Papierstoff, Altpapierstoff, Asbest, Glasfasern, Glasfeinstfasern, Steinwolle, Kaol-

infasern, Aluminiumoxidfasern, Kohlenstofffasern, Metallfasern, Fasern und Feinstfasern auf der Basis von aliphatischen, araliphatischen oder aromatischen, organischen polymeren Verbindungen und/oder Metallfasern verwendet werden.

7. Verfahren nach Ansprüchen 2 bis 6, dadurch gekennzeichnet, daß man als Intumeszenzmittel expandierende Glimmer, expansionsfähige Borsilikate, Aluminate, Wasserglas-Gele, wasserhaltige Alkalisilikate, Additionsprodukte von Ammoniak oder Aminen an saure Aluminiumphosphate, Ammoniumphosphate, Aminphosphate, Ammoniumpolyphosphate, Aminpolyphosphate, blähfähige Korkpulver, expansionsfähige Getreidekörner, Stärkezubereitungen, Rindenpulver und/oder Pulver aus blähfähigem Polyurethan verwendet.

8. Verwendung von intumeszenzfähigen Flächengebilden nach Anspruch 1 oder hergestellt nach Ansprüchen 2 bis 7 zur Herstellung von Kunstharzimprägnaten, die lagerfähig sind und bei Erhitzung auf 80 bis 600°C gegebenenfalls unter Formgebung ausgehärtet werden können.

9. Verwendung von intumeszenzfähigen Flächengebilden nach Anspruch 1 oder hergestellt nach den Ansprüchen 2 bis 7, dadurch gekennzeichnet, daß man intumeszenzfähige Flächengebilde mit Deckschichten aus thermoplastischem Material zur Herstellung von sandwichartigen Leichtformkörpern verwendet, indem man das in den Flächengebilden enthaltene Intumeszenzmittel bei Temperaturen im Bereich 200 bis 2000° unter Formgebung expandieren läßt.

10. Verwendung von intumeszenzfähigen Flächengebilden nach Anspruch 1 oder hergestellt nach den Ansprüchen 2 bis 7 zur Herstellung von Leichtformkörpern, dadurch gekennzeichnet, daß man intumeszenzfähige Flächengebilde mit Deckschichten aus nicht-thermoplastischem Material in Formen bis zu 900°C erhitzt und dabei das Intumeszenzmittel expandieren läßt.